Europäisches Patentamt

European Patent Office

Office européen des brevets

(11) Numéro de publication: **0 218 493**
**A1**

## (12) DEMANDE DE BREVET EUROPEEN

(21) Numéro de dépôt: **86401874.2**

(22) Date de dépôt: **26.08.86**

(51) Int. Cl.⁴: **B 62 M 7/02**

(30) Priorité: **16.09.85 FR 8513706**

(43) Date de publication de la demande:
**15.04.87 Bulletin 87/16**

(84) Etats contractants désignés:
**AT BE CH DE GB IT LI LU NL**

(71) Demandeur: **CYCLES PEUGEOT Société dite:**
**Beaulieu**
**F-25700 Valentigney (FR)**

(72) Inventeur: **Lacroix, Bernard**
**2, rue de la Vouivre**
**F-25200 Montbeliard (FR)**

(74) Mandataire: **Moncheny, Michel et al**
**c/o Cabinet Lavoix 2 Place d'Estienne d'Orves**
**F-75441 Paris Cedex 09 (FR)**

(54) **Véhicule motorisé à deux roues.**

(57) Le but que l'invention se propose d'atteindre est de réaliser un véhicule qui tout en étant léger et bon marché soit particulièrement bien adapté à une utilisation tout terrain.

A cet effet, l'invention a pour objet un véhicule motorisé comprenant un cadre ou châssis supportant à sa partie avant un ensemble de roue avant et de direction (10), et à sa partie arrière une selle (5), un ensemble de roue arrière motrice (20) et un ensemble motopropulseur comprenant un groupe moteur (40) et une transmission (45, 46, 47), caractérisé en ce que le cadre ou châssis a une forme générale triangulaire (A, B, C) et le groupe moteur (40) constituant l'un des côtés du triangle est disposé entre deux sommets (B, C) du cadre triangulaire qui reçoivent respectivement la selle (5) et une boîte de pédalier (6).

FIG.1

EP 0 218 493 A1

## Description

Véhicule motorisé à deux roues

La présente invention concerne les véhicules motorisés à deux roues destinés notamment à un usage tout terrain.

On connait des cyclomoteurs destinés à un usage urbain ou routier comprenant un cadre ouvert sous lequel est accroché le moteur. De tels cyclomoteurs sont limités à un usage urbain et ne sont absolument pas adaptés à une utilisation tout terrain car, d'une part, la structure du cadre ne peut supporter les efforts importants engendrés en terrains difficiles et, d'autre part, les organes moteurs ne sont pas protégés et seraient donc rapidement endommagés.

On connait par ailleurs des véhicules motorisés à deux roues du type vélomoteur ou moto, comportant un châssis dont la structure est adaptée à un usage tout terrain, mais de tels véhicules présentent en contre partie un poids important et sont d'un coût élevé.

Le but que l'invention se propose d'atteindre est de réaliser un véhicule qui tout en étant léger et bon marché soit particulièrement bien adapté à une utilisation tout terrain.

A cet effet, l'invention a pour objet un véhicule motorisé comprenant un cadre ou châssis supportant à sa partie avant un ensemble de roue avant et de direction, et à sa partie arrière une selle, un ensemble de roue arrière motrice et un ensemble motopropulseur comprenant un groupe moteur et une transmission, caractérisé en ce que le cadre ou châssis a une forme générale triangulaire et le groupe moteur, constituant l'un des côtés du triangle, est disposé entre deux sommets du cadre triangulaire qui reçoivent respectivement la selle et une boîte de pédalier.

Suivant d'autres caractéristiques :
- le bloc moteur comporte des plaques ou oreilles, fixées ou venues de matière, assurant la liaison avec deux éléments supérieur et inférieur du cadre, au moins l'une desdites plaques ou oreilles servant de support pour un arbre intermédiaire de la transmission entre le moteur et la roue arrière motrice;
- l'élément supérieur du cadre est un tube qui sert de réservoir de carburant;
- l'ensemble de roue arrière comprend deux bras inférieurs ou bases s'étendant vers l'arrière à partir de la boîte de pédalier et deux haubans s'étendant à partir du tube de selle, les tubes, les bras et les haubans formant pratiquement un losange dont le bloc-moteur constitue une diagonale.

L'invention va être décrite plus en détail ci-dessous en se référant au dessin annexé, donné uniquement à titre d'exemple et sur lequel :
- la Figure 1 est une vue en élévation latérale avec arrachement d'un véhicule suivant l'invention;
- la Figure 2 représente une variante de ce véhicule.

On voit sur le dessin un véhicule motorisé à deux roues, l'invention pouvant d'ailleurs s'appliquer à un véhicule tricycle comportant une roue avant et deux roues arrière.

Ce véhicule comprend principalement un cadre ou châssis de forme générale triangulaire dont les trois sommets sont désignés par les lettres A, B, C. Ce cadre comprend un tube de direction 1 situé au niveau du sommet avant A, à partir duquel s'étendent deux tubes 2, 3 constituant deux des côtés du trian gle. Le tube supérieur 2 de forte section constitue simultanément un réservoir de carburant et porte à son extrémité arrière un tube de selle 4 portant une selle 5. Le tube inférieur 3, de section normale s'étend entre le tube de direction 1 et une boîte de pédalier 6.

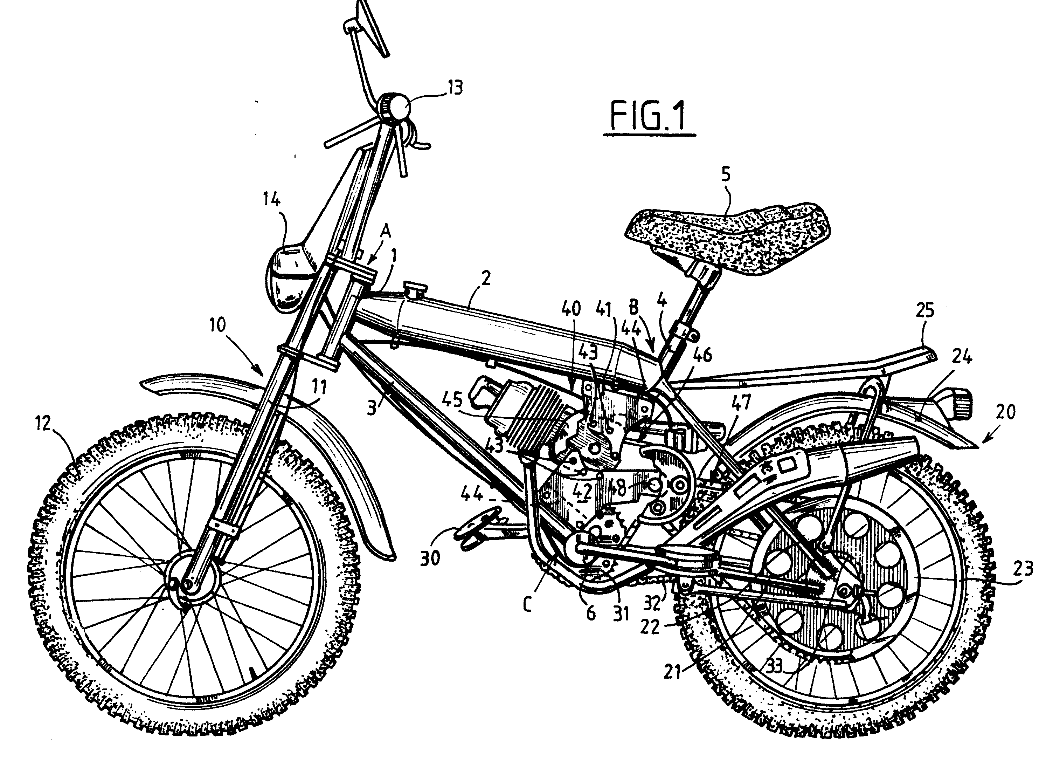

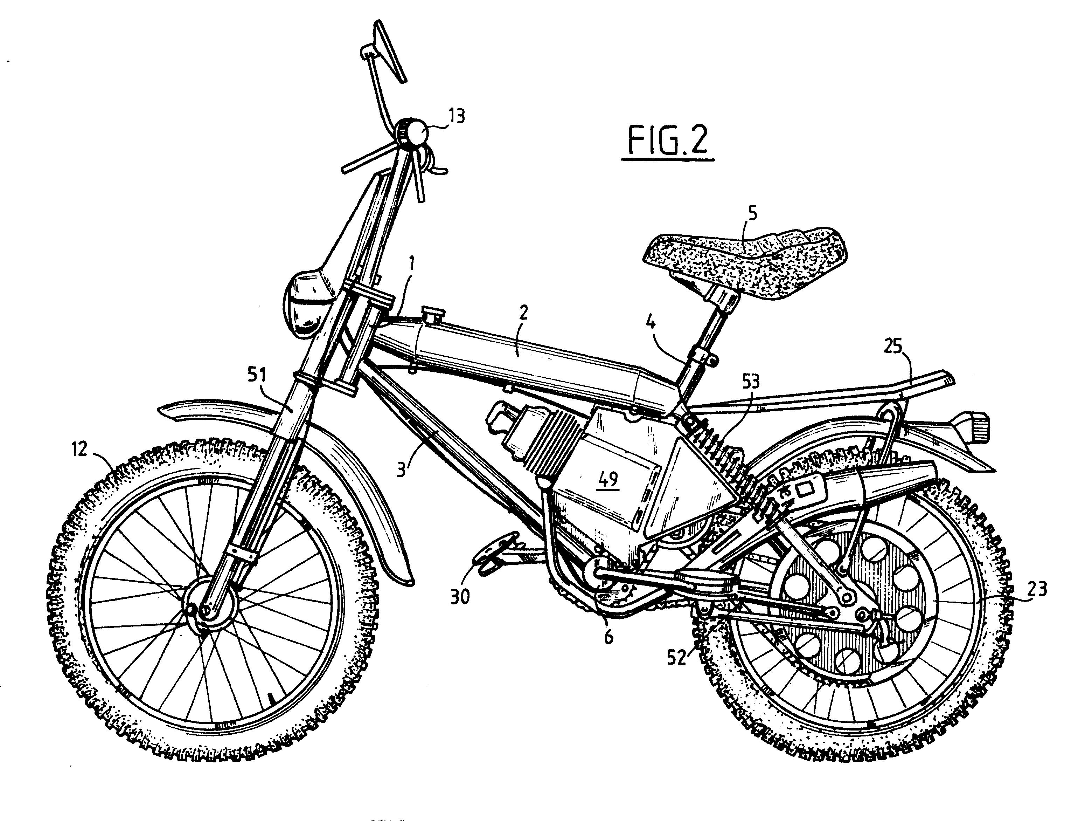

Sur le tube de direction est monté de façon classique un ensemble de roue avant et de direction 10, comprenant une fourche 11 portant la roue avant 12, un guidon 13 et un ensemble de phares 14. Un tel ensemble étant bien connu ne sera pas décrit plus en détail. La fourche avant peut être rigide comme représenté sur la Figure 1 ou télescopique comme représenté sur la Figure 2.

Dans le mode de réalisation de cette même Figure 1, l'ensemble de roue arrière 20 comprend deux bras inférieurs ou bases 21 s'étendant vers l'arrière à partir de la boîte de pédalier et deux haubans 22 s'étendant à partir du tube de selle 4. Ces bras et ces haubans portent de façon connue une roue arrière 23, un garde-boue 24 et un porte-bagages 25, tout ceci n'ayant pas à être décrit plus en détail. Les tubes 2, 3, les bras 21 et les haubans 22 formant pratiquement un losange.

En dehors du dispositif d'entraînement traditionnel à pédales 30, plateau de pédalier 32, chaîne 32, pignon arrière 33, l'ensemble moto-propulseur comprend un groupe moteur 40 qui est disposé entre les tubes inférieur 2 et supérieur 3 du cadre et qui constitue un élément de structure de ce cadre, à peu près entre les sommets B et C de ce dernier. A cet effet, le moteur porte à sa partie supérieure et à sa partie inférieure deux paires de plaques rigides 41, 42 qui dans l'exemple choisi sont démontables aussi bien par rapport au moteur que par rapport aux éléments adjacents du cadre. En variante, ces plaques peuvent venir de matière soit avec le bloc moteur, soit avec lesdits éléments du cadre. Ces plaques sont donc fixées par des boulons et écrous 43 sur le bloc moteur et sur des pattes 44 solidaires des tubes inférieur et supérieur. De préférence, ces plaques sont fixées au moyen des mêmes boulons qui servent à solidariser les deux demi-carters du moteur.

Dans l'exemple représenté, la transmission entre le vilebrequin du moteur et la roue arrière s'effectue au moyen d'un embrayage automatique 45, par exemple centrifuge, d'un premier étage de démultiplication 46 du type à poulies et courroie, et d'un deuxième étage de démultiplication 47 du type à chaîne et pignons.

De façon avantageuse, les plaques inférieures 4 servent de support pour l'arbre intermédiaire 48 de la transmission, c'est-à-dire l'arbre sur lequel se trouvent la poulie réceptrice du premier étage de la transmission et le pignon menant du deuxième étage de cette transmission.

Cet ensemble motopropulseur constitue en fait un sous-ensemble qui peut être préassemblé avant d'être monté sur le cadre. Il est de préférence masqué et protégé par des éléments de carter 49 (Figure 2).

Le groupe motopropulseur est par ailleurs complété par les dispositifs classiques d'alimentation en carburant, d'allumage et d'échappement qu'il est parfaitement inutile de décrire ici.

Un tel véhicule répond parfaitement aux objectifs fixés :
- il présente une structure à la fois légère, très rigide et résistante, grâce à la disposition originale du moteur et la participation de ce moteur à la rigidité du cadre;
- le groupe motopropulseur étant disposé entre les tubes supérieur et inférieur du cadre se trouve parfaitement protégé, ce qui permet une utilisation sur des terrains accidentés;
- la garde au sol est importante;
- le centre de gravité du véhicule se trouve à un niveau moyen, ce qui en améliore la maniabilité;
- l'ensemble est particulièrement compact, grâce aux diverses solutions adoptées et notamment à l'utilisation du tube supérieur du cadre comme réservoir de carburant;
- l'assemblage de ce véhicule est particulièrement aisé, de même que son démontage, compte tenu de la façon dont l'ensemble motopropulseur est agencé et fixé sur le cadre.

Dans la variante représentée à la Figure 2, la structure d'ensemble du véhicule n'est pas modifiée. On a simplement remplacé la fourche avant rigide par une fourche télescopique 51 et l'ensemble de support rigide de la roue arrière, par un dispositif de suspension comportant des bras inférieurs 52 articulés sur le cadre principal autour d'un axe transversal et reliés par leur partie arrière à la partie supérieure du cadre par des amortisseurs 53. Ces deux aménagements sont cependant connus en soi et ne seront pas décrits plus en détail. Ils n'ont été représentés que pour illustrer le fait que l'invention peut être appliquée à des véhicules de configurations différentes.

## Revendications

1 - Véhicule motorisé comprenant un cadre ou châssis supportant à sa partie avant un ensemble de roue avant et de direction (10), et à sa partie arrière une selle (5), un ensemble de roue arrière motrice (20) et un ensemble motopropulseur comprenant un groupe moteur (40) et une transmission (45, 46, 47), caractérisé en ce que le cadre ou châssis a une forme générale triangulaire (A, B, C) et le groupe moteur (40) constituant l'un des côtés de ce cadre est disposé entre deux sommets (B, C) du cadre triangulaire qui reçoivent respectivement la selle (5) et une boîte de pédalier (6).

2 - Véhicule suivant la revendication 1, caractérisé en ce que le bloc moteur (40) comporte des plaques ou oreilles (41, 42), assurant la liaison avec deux éléments supérieur (2) et inférieur (3) du cadre.

3 - Véhicule suivant la revendication 2, caractérisé en ce qu'au moins l'une desdites plaques ou oreilles (41, 42) sert de support pour un arbre intermédiaire (48) de la transmission entre le moteur et la roue arrière motrice.

4 - Véhicule suivant la revendication 2, caractérisé en ce qu'il est prévu deux paires de plaques supérieures (41) et inférieures (42) fixées sur le bloc moteur (40) par les boulons (43) de fixation de deux demi-carters de ce bloc.

5 - Véhicule suivant la revendication 1, caractérisé en ce que l'élément supérieur (2) du cadre est un tube qui sert de réservoir de carburant.

6 - Véhicule suivant la revendication 2, caractérisé en ce que l'ensemble de roue arrière (20) comprend deux bras inférieurs ou bases (21) s'étendant vers l'arrière à partir de la boîte de pédalier et deux haubans (22) s'étendant à partir du tube de selle (4), les tubes (2, 3), les bras (21) et les haubans (22) formant pratiquement un losange dont le bloc moteur constitue une diagonale.

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 075 444 (WE GROUP OF COMPANIES LTD.) <br> * Figures 1-14; page 129; pages 2-4, lignes 1-85 * | 1 | B 62 M 7/02 |
| | --- | | |
| X | FR-A-2 405 860 (PLISSON) <br> * Figures 1,2; page 2, lignes 3-35; pages 3,4 * | 1,2 | |
| | --- | | |
| A | US-A-4 508 189 (HIROMI KATO) <br> * Figures 1-6; colonne 2, lignes 53-68; colonnes 3-7, lignes 1-15 * | 1 | |
| | ----- | | |

DOMAINES TECHNIQUES
RECHERCHES (Int. Cl.4)

B 62 M
B 62 K

Le présent rapport de recherche a été établi pour toutes les revendications

| Lieu de la recherche | Date d'achèvement de la recherche | Examinateur |
|---|---|---|
| LA HAYE | 11-12-1986 | VANNESTE M.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82